(19) Europäisches Patentamt
European Patent Office
Office européen des brevets

(11) **EP 4 241 111 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **21751562.6**

(22) Anmeldetag: **28.07.2021**

(51) Internationale Patentklassifikation (IPC):
**G01S 7/497** *(2006.01)* **G01S 17/931** *(2020.01)*
**G01S 7/487** *(2006.01)*

(52) Gemeinsame Patentklassifikation (CPC):
**G01S 17/931; G01S 7/4873; G01S 7/497**

(86) Internationale Anmeldenummer:
**PCT/EP2021/071132**

(87) Internationale Veröffentlichungsnummer:
**WO 2022/096167 (12.05.2022 Gazette 2022/19)**

(54) **VERFAHREN ZUR ERMITTLUNG EINER ÄNDERUNG EINER REICHWEITE EINES LIDARSENSORS**

METHOD FOR DETERMINING A CHANGE IN A RANGE OF A LIDAR SENSOR

PROCÉDÉ DE DÉTERMINATION D'UN CHANGEMENT DE PORTÉE D'UN CAPTEUR LIDAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2020 DE 102020128877**

(43) Veröffentlichungstag der Anmeldung:
**13.09.2023 Patentblatt 2023/37**

(73) Patentinhaber: **Mercedes-Benz Group AG 70372 Stuttgart (DE)**

(72) Erfinder:
• **SCHINDLER, Philipp**
  **76189 Karlsruhe (DE)**
• **SCHARF, Andreas**
  **70435 Stuttgart (DE)**

(74) Vertreter: **Novagraaf Group**
  **Chemin de l'Echo 3**
  **1213 Onex / Geneva (CH)**

(56) Entgegenhaltungen:
**EP-A1- 2 637 038   DE-A1- 102018 126 497**

## Beschreibung

Die Erfindung betrifft ein Verfahren zur Ermittlung einer Änderung einer Reichweite eines Lidarsensors für ein Fahrzeug oder einen Roboter.

Aus der DE 199 48 252 A1 ist ein Verfahren zur Zustandserkennung bei einem System zu einer automatischen Längs- und Querregelung bei einem Kraftfahrzeug, arbeitend nach dem Lidarprinzip zur Verschmutzungserkennung eines Sensors bekannt. Die Zustandserkennung ist von zwei Indikatoren abhängig, die aus von dem Sensor empfangenen und ausgesendeten Signalen gebildet werden. Die Indikatoren werden mit Wichtungsfaktoren gewichtet und zu einer einzigen Wahrscheinlichkeit verknüpft, wobei aus der Wahrscheinlichkeit eine Aussage über eine Verschmutzung des Sensors abgeleitet wird, wenn ein vorgegebener Schwellwert für eine vorgegebene Zeitdauer über- oder unterschritten wird. Dabei wird die Zeitdauer bei einer kleinen Fahrzeuggeschwindigkeit größer als bei einer großen Fahrzeuggeschwindigkeit gewählt. Als Indikatoren werden eine Objektstabilität, welche eine Rate von Detektionsausfällen eines für eine Fahrzeuglängsregelung ausgewählten Zielobjekts angibt, und eine Summe aller während einer Messung detektierten Objekte verwendet.

Weiterhin beschreibt die DE 10 2020 115 252 A1 ein Verfahren und eine Vorrichtung zu einer Erkennung von Verunreinigungen auf einer Schutzscheibe eines Lidarsensors. Dabei wird ein Erfassungsbereich des Lidarsensors in mehrere Sektoren unterteilt, wobei sektorenweise ermittelt wird, ob im jeweiligen Sektor eine Verunreinigung auf der Schutzscheibe vorliegt. Hierzu wird in dem jeweiligen Sektor ein Sektor-Hintergrundrauschen ermittelt und in einem verbleibenden Erfassungsbereich oder dem gesamten Erfassungsbereich wird ein Erfassungsbereich-Hintergrundrauschen ermittelt, wobei dann auf eine Verunreinigung im jeweiligen Sektor geschlossen wird, wenn das Sektor-Hintergrundrauschen signifikant geringer ist als das Erfassungsbereich-Hintergrundrauschen. Alternativ oder zusätzlich wird in dem jeweiligen Sektor ein Sektor-Hintergrundrauschen bei unterschiedlichen Empfindlichkeiten eines Empfängers des Lidarsensors ermittelt, wobei dann auf eine Verunreinigung im jeweiligen Sektor geschlossen wird, wenn ein bei höherer Empfindlichkeit ermitteltes Sektor-Hintergrundrauschen nicht signifikant höher ist als ein bei geringerer Empfindlichkeit ermitteltes Sektor-Hintergrundrauschen.

Aus der DE 10 2018 126 497 A1 ist ein Verfahren zur Ermittlung einer Änderung einer Reichweite eines optischen Sensors eines Fahrzeugs bekannt. Dazu wird ein optisches Sendesignal in einen Überwachungsbereich gesendet und das an einem Objekt reflektierte Sendesignal als ein Empfangssignal empfangen. Aus einer Laufzeit des Sendesignals zwischen dem Senden des Sendesignals und dem Empfangen des entsprechenden Empfangssignals wird eine Entfernung des Objekts relativ zur Detektionsvorrichtung bestimmt. Für ein erfasstes Objekt werden in unterschiedlichen Entfernungen die Intensitäten der Empfangssignale und die entsprechenden Entfernungen als Wertepaare bestimmt. Diese Wertepaare werden als Referenzwertepaare für das eine Objekt gespeichert, und, sofern dasselbe Objekt wiederholt oder über einen längeren Zeitraum von der Detektionsvorrichtung erfasst wird, wird die Intensität wenigstens eines Empfangssignals mit einer Referenzintensität des Referenzwertepaars bei derselben Entfernung verglichen. Falls die erfasste Intensität des Empfangssignals außerhalb eines vorgegebenen oder vorgebbaren Annahmebereichs um die Referenzintensität des entsprechenden Referenzwertepaars liegt, wird auf eine Änderung der Reichweite der Detektionsvorrichtung geschlossen.

Aus der EP 2 637 038 A1 ist ein optischer Sensor zur Abstandsmessung bekannt, bei dem die Abstandsmessung auf der Ermittlung einer Signallaufzeit eines zu einem Objekt ausgesendeten und am Objekt zurückreflektierten optischen Pulses basiert. Dabei ist vorgesehen, eine Reichweite des Sensors durch eine Verlängerung einer Pulsdauer des optischen Pulses zu erweitern.

Der Erfindung liegt die Aufgabe zu Grunde, ein neuartiges Verfahren zur Ermittlung einer Änderung einer Reichweite eines Lidarsensors für ein Fahrzeug oder einen Roboter anzugeben.

Die Aufgabe wird erfindungsgemäß gelöst durch ein Verfahren, welches die im Anspruch 1 angegebenen Merkmale aufweist.

Vorteilhafte Ausgestaltungen der Erfindung sind Gegenstand der Unteransprüche.

In dem Verfahren zur Ermittlung einer Änderung einer Reichweite eines Lidarsensors für ein Fahrzeug oder einen Roboter werden erfindungsgemäß in einer Referenzmessung mit einem in einem vorgegebenen Abstand zu dem Lidarsensor befindlichen Referenzziel ein Referenzrauschpegel von mittels des Lidarsensors empfangener Infrarotstrahlung und ein Signal-Rausch-Verhältnis am Referenzziel reflektierter und vom Lidarsensor empfangener Infrarotstrahlung ermittelt. In einer Fahrbetriebsmessung wird während eines Fahrbetriebs des Fahrzeugs oder Roboters ein aktueller Rauschpegel von mittels des Lidarsensors empfangener Infrarotstrahlung ermittelt und aus dem aktuellen Rauschpegel wird ein theoretischer Abstand zu einer Position, an welcher sich das Referenzziel befinden müsste, wenn bei aktuellem Rauschpegel das gleiche Signal-Rausch-Verhältnis wie bei der Referenzmessung vorliegt, ermittelt. Weiterhin wird in einer Reichweitenänderungsrechnung eine Abweichung zwischen dem vorgegebenen Abstand und dem theoretischen Abstand ermittelt, wobei die Abweichung der Änderung der Reichweite des Lidarsensors gegenüber dessen Reichweite während der Referenzmessung entspricht. Der theoretische Abstand wird dabei wie folgt ermittelt: Zunächst wird aus dem aktuellen Rauschpegel durch Multiplikation des Rauschpegels mit dem in der Referenzmessung ermittelten Signal-Rausch-Verhältnis ein Wert einer Intensität der Infrarotstrahlung ermittelt. Der theoretische Abstand wird sodann aus dem ermittelten Wert der Intensität der Infrarotstrahlung und einer bekannten wegabhängigen Dämpfung der Infrarotstrahlung ermittelt.

Beispielsweise bei einem automatisierten, insbesondere hochautomatisierten oder autonomen Fahrzeug oder Roboter bestimmt eine aktuelle Sensorsichtweite, auch als Sensorreichweite oder Detection Range bezeichnet, maßgeblich Fahrparameter, wie beispielsweise eine Maximalgeschwindigkeit oder ein Minimalabstand zu anderen Fahrzeugen, Robotern oder Objekten. Somit ist eine zuverlässige Ermittlung einer momentanen Sensorsichtweite ein essentielles Kriterium für die Sicherheit von automatisiert fahrenden Fahrzeugen und Robotern. Als Referenzsensoren für eine Reichweitenbestimmung von Objekten gilt dies im Besonderen für Lidarsensoren.

Mittels des vorliegenden Verfahrens wird eine zuverlässige und vertrauenswürdige Sensorsichtweitenschätzung während einer Lebensdauer des Lidarsensors ermöglicht. Somit kann eine Verfügbarkeit von Systemen, welche mittels des Lidarsensors erfasste Daten verwenden, signifikant erhöht werden. Dabei wird aufgrund einer Vermessung des Rauschens eine zuverlässige Schätzung einer vertrauenswürdigen Reichweite des Lidarsensors ermöglicht, auch ohne ein Vorhandensein von Zielen. Hierbei ist das Verfahren zumindest weitestgehend unabhängig vom einem exakten Typ eines Objekts im Sichtfeld, welche für andere Schätzungen oft genutzt wird und großen Schwankungen unterliegt, wie zum Beispiel verschmutzte Fahrzeuge oder Verkehrsschilder. Wenn eine gesamte Rauschkurve ermittelt wurde, können auch entfernungsabhängige Werte ermittelt werden, wenn beispielsweise ein sehr heller Fahrbahnbelag relativ zu einem dunklen Fahrbahnbelag mehr Sonnenlicht reflektiert, wie es oft bei ausgebesserten Stellen einer Fahrbahn vorkommt. Die Entfernungsschätzung kann darüber hinaus für Raumwinkel unabhängig durchgeführt werden, was eine Erweiterung einer Information für eine Systemdegradation bereitstellt.

In einer möglichen Ausgestaltung des Verfahrens wird die Reichweite als Abstand definiert, bei welchem das Signal-Rausch-Verhältnis einem vorgegebenen Schwellwert entspricht. Dies ermöglicht eine einfache und exakte Ermittlung der Reichweite.

Im erfindungsgemäßen Verfahren wird in der Fahrbetriebsmessung bei der Ermittlung des theoretischen Abstands eine wegabhängige Dämpfung von Lidarstrahlung berücksichtigt. Hierdurch kann eine Genauigkeit bei der Ermittlung der Reichweite weiter erhöht werden.

In einer weiteren möglichen Ausgestaltung des Verfahrens wird die Referenzmessung nach einer definierten Zeit erneut durchgeführt. Dies ermöglicht eine Aktualisierung des in der Referenzmessung ermittelten Referenzrauschpegels und des Signal-Rausch-Verhältnisses am Referenzziel, so dass beispielsweise Alterungseffekte des Lidarsensors berücksichtigt werden können.

In einer weiteren möglichen Ausgestaltung des Verfahrens wird in der Referenzmessung bei der Ermittlung des Referenzrauschpegels eine Änderung eines intrinsischen Rauschanteils des Lidarsensors berücksichtigt. Aufgrund der Berücksichtigung des intrinsischen Rauschanteils lässt sich der Referenzrauschpegel im Betrieb unter kontrollierten Bedingungen nachbilden und Alterungseffekte können während der Lebensdauer des Lidarsensors in einfacher Weise und mit hoher Zuverlässigkeit berücksichtigt werden.

In einer weiteren möglichen Ausgestaltung des Verfahrens erfolgt die Berücksichtigung der Änderung des intrinsischen Rauschanteils rechnerisch, indem der Referenzrauschpegel und das Signal-Rausch-Verhältnis am Referenzziel um einen jeweiligen Anteil korrigiert werden, welcher aus dem intrinsischen Rauschanteil folgt. Somit können aufwändige Prozessschritte zur Berücksichtigung der Änderung des intrinsischen Rauschanteils entfallen.

In einer weiteren möglichen Ausgestaltung des Verfahrens wird der intrinsische Rauschanteil während einer Totmesszeit des Lidarsensors, in welcher ein Empfänger des Lidarsensors von externer Strahlung abgeschirmt ist, ermittelt, indem in der Totmesszeit mittels einer innerhalb des Lidarsensors angeordneten Infrarotstrahlungsquelle ein Referenz-Infrarotsignal auf den Empfänger gesendet wird und ein Dunkelphasen-Rauschpegel ermittelt wird. Eine solche einer "Dunkelmessung" abgeschirmt gegenüber externer Strahlung und/oder Licht durchgeführte Ermittlung des intrinsischen Rauschanteils unter Nutzung eines definierten Referenz-Infrarotsignals einer Infrarotstrahlungsquelle ermöglicht eine exakte Nachbildung des Referenzrauschpegels im Betrieb unter kontrollierten Bedingungen, so dass Alterungseffekte des Lidarsensors während dessen Lebensdauer zuverlässig berücksichtigt werden können. Die Infrarotstrahlungsquelle ist beispielsweise eine leistungskontrollierte Infrarot-Leuchtdiode.

In einer weiteren möglichen Ausgestaltung des Verfahrens wird der Dunkelphasen-Rauschpegel als Mittelwert aus mehreren Dunkelphasen-Rauschpegeln ermittelt. Somit können im Verlauf auftretende Schwankungen ausgeglichen werden.

In einer weiteren möglichen Ausgestaltung des Verfahrens wird der Dunkelphasen-Rauschpegel während des Fahrbetriebs des Fahrzeugs oder Roboters ermittelt. Somit ist keine zusätzliche Ermittlung des Dunkelphasen-Rauschpegels außerhalb des Fahrbetriebs erforderlich. Daraus folgend können beispielsweise zusätzliche Werkstatt-Aufenthalte zur Durchführung von Referenzmessungen entfallen.

In einer weiteren möglichen Ausgestaltung des Verfahrens wird die Referenzmessung als Bandende-Prüfung am Ende einer Herstellung des Fahrzeugs oder Roboters durchgeführt, wobei diese einfach in einen Herstellungsablauf des Fahrzeugs oder Roboters integrierbar ist.

Ausführungsbeispiele der Erfindung werden im Folgenden anhand von Zeichnungen näher erläutert.

Dabei zeigen:

Fig. 1 schematisch eine in einer Referenzmessung ermittelte Intensität einer Lidarreflexion in Abhängigkeit eines Abstands zu einem Objekt,

Fig. 2 schematisch eine bei Nacht ermittelte Intensität einer Lidarreflexion in Abhängigkeit eines Abstands zu einem Objekt im Vergleich zur Referenzmessung gemäß Figur 1,

Fig. 3 schematisch die bei Nacht ermittelte Intensität der Lidarreflexion im Vergleich zur Referenzmessung gemäß Figur 2 sowie eine Ermittlung einer Position eines Referenzziels bei einem verringerten Rauschpegel,

Fig. 4 schematisch eine bei Sonnenschein ermittelte Intensität einer Lidarreflexion in Abhängigkeit eines Abstands zu einem Objekt im Vergleich zur Referenzmessung gemäß Figur 1 sowie eine Ermittlung einer Position eines Referenzziels bei einem höheren Rauschpegel,

Fig. 5 schematisch einen Vergleich von einer bei einer Referenzmessung, einer bei Nacht durchgeführten Messung und einer bei Sonnenschein durchgeführten Messung ermittelten Intensität einer Lidarreflexion in Abhängigkeit eines Abstands zu einem Objekt,

Fig. 6 schematisch einen Lidarsensor in einem ersten Zustand eines Spiegels und

Fig. 7 schematisch den Lidarsensor gemäß Figur 5 in einem zweiten Zustand des Spiegels.

Einander entsprechende Teile sind in allen Figuren mit den gleichen Bezugszeichen versehen.

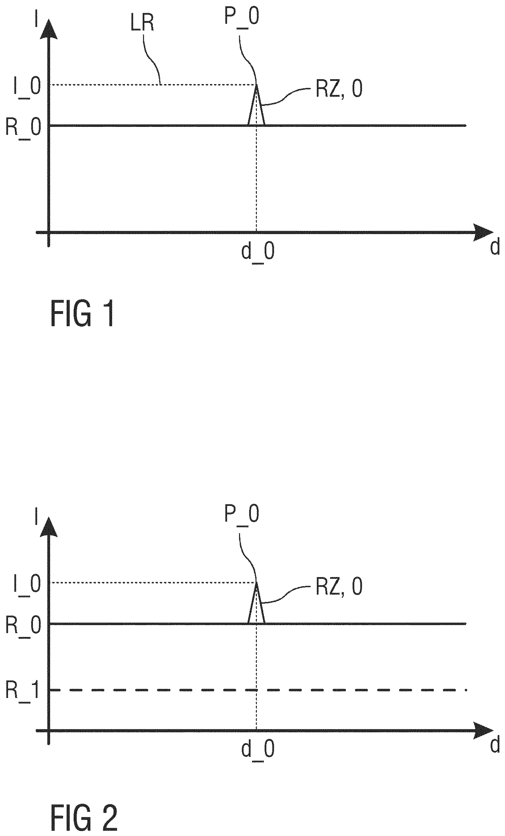

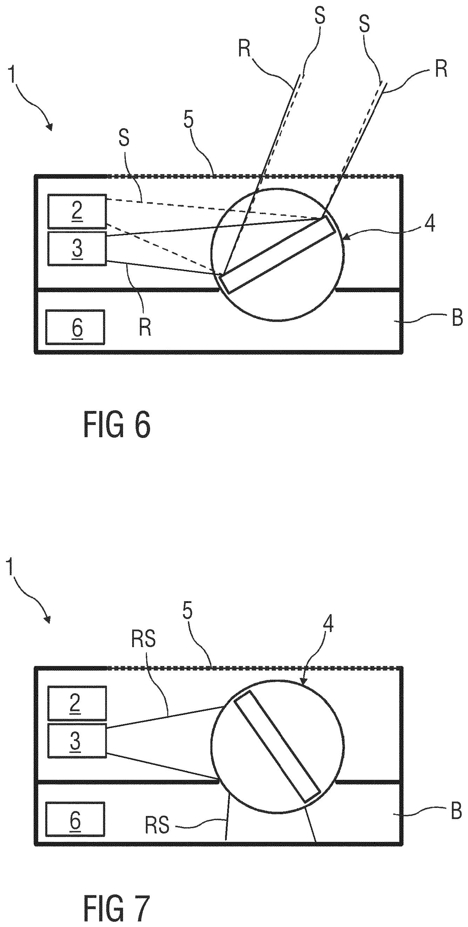

In Figur 1 ist eine in einer Referenzmessung ermittelte Intensität I einer mittels eines beispielsweise in den Figuren 6 und 7 dargestellten Lidarsensors 1 empfangenden Lidarreflexion LR in Abhängigkeit eines Abstands d zu einem als Referenzziel RZ ausgebildeten Objekt O dargestellt. Das Objekt O befindet sich dabei an einer Position $P\_0$.

Mittels des Lidarsensors 1 erfasste Umgebungsdaten werden beispielsweise zum Betrieb eines automatisiert, insbesondere hochautomatisiert oder autonom betriebenen Fahrzeugs oder Roboters verwendet. Für einen zuverlässigen Betrieb des Fahrzeugs oder Roboters ist die Kenntnis einer Reichweite des Lidarsensors 1 zwingend erforderlich, um eine automatisierte Längs- und/oder Quersteuerung entsprechend anzupassen.

Zur Ermittlung der Reichweite wird der Lidarsensor 1 beispielsweise am Bandende einer Herstellung des Fahrzeugs oder Roboters, beispielsweise an einem so genannten End-of-Line-Prüfstand, kurz EOL-Prüfstand, bei vorgegebenen Bedingungen in einer Referenzmessung vermessen. Beispielsweise wird hierbei bei einer vorgegebenen Hintergrundstrahlung von zum Beispiel 50 klux für ein Referenzziel RZ mit definierter Größe von beispielsweise 2 m x 2 m und definierter Reflektivität von beispielsweise 10 % eine Reichweite bestimmt, bei welcher mit einer definierten Wahrscheinlichkeit von beispielsweise 90 % ein Messpunkt erhalten wird.

Dabei wird ein Referenzrauschpegel $R\_0$ vom Lidarsensor 1 empfangener und in den Figuren 6 und 7 näher dargestellter Infrarotstrahlung S, das heißt Intensität eines empfangenen Rauschsignals, ermittelt. Eine so ermittelte Rauschkurve ist vorliegend vereinfacht als Gerade dargestellt. Weiterhin wird eine Intensität $I\_0$ der mittels des Lidarsensors 1 erfassten Lidarreflexion LR gemessen.

Weiterhin wird ein Signal-Rausch-Verhältnis ermittelt, das sich ergibt, wenn die Infrarotstrahlung S an einem vorgegebenen Referenzziel RZ reflektiert wird, welches sich in einem definierten Abstand $d\_0$ vor dem Lidarsensor 1 befindet und das die vorgegebene Größe und vorgegebene Reflektivität aufweist. Die Reichweite des Lidarsensors 1 wird als Abstand d definiert, bei dem das Signal-Rausch-Verhältnis einem vorgegebenen Schwellwert des Signal-Rausch-Verhältnisses entspricht.

Das Signal-Rausch-Verhältnis der Lidarreflexion LR der Referenzmessung ergibt sich dabei gemäß:

$$SNR\_0 = \frac{I\_0}{R\_0} \qquad\qquad (1)$$

Das Signal-Rausch-Verhältnis $SNR\_0$ wird dann als Referenz-Signal-Rausch-Verhältnis gespeichert und der Rauschpegel $R\_0$ wird als Referenzrauschpegel $R\_0$ gespeichert.

Wenn das Referenz-Signal-Rausch-Verhältnis $SNR\_0$ gleich dem vorgegebenen Schwellwert des Signal-Rausch-Verhältnisses ist, dann entspricht der Abstand $d\_0$ der Reichweite des Lidarsensors 1.

Wenn das Referenz-Signal-Rausch-Verhältnis $SNR\_0$ größer als der vorgegebene Schwellwert des Signal-Rausch-Verhältnisses ist, das heißt, der Schwellwert noch nicht erreicht ist, dann ist die Reichweite größer als der Abstand d_0.

Aus einer bekannten Dämpfung von Lidarstrahlung über die Weglänge, aufgrund welcher eine Intensität der Lidarstrahlung quadratisch mit der Weglänge abnimmt, lässt sich dann die Weglänge ermitteln, um welche das Referenzziel RZ nach hinten verschoben werden müsste, damit ein Signal-Rausch-Verhältnis erhalten wird, das gleich dem vorgegebenen Schwellwert des Signal-Rausch-Verhältnisses ist.

Aus dem Abstand d_0 und dem Referenz-Signal-Rausch-Verhältnis SNR_0 kann somit die Reichweite ermittelt werden. Auch kann die Reichweite ermittelt werden, indem das Referenzziel RZ schrittweise solange nach hinten verschoben wird, bis das im jeweiligen Schritt ermittelte Signal-Rausch-Verhältnis dem Schwellwert des Signal-Rausch-Verhältnisses entspricht.

Figur 2 zeigt eine bei Nacht ermittelte Intensität I einer Lidarreflexion LR in Abhängigkeit eines Abstands d_0 zu einem Objekt O im Vergleich zur Referenzmessung gemäß Figur 1.

Während des regulären Betriebs des Fahrzeugs oder Roboters, beispielsweise nach Auslieferung des Fahrzeugs oder Roboters an einen Kunden, wird in Fahrbetriebsmessungen der Rauschpegel regelmäßig neu gemessen.

Bei Nacht wird dabei ein Rauschpegel R_1 ermittelt, der niedriger ist als der Referenzrauschpegel R_0.

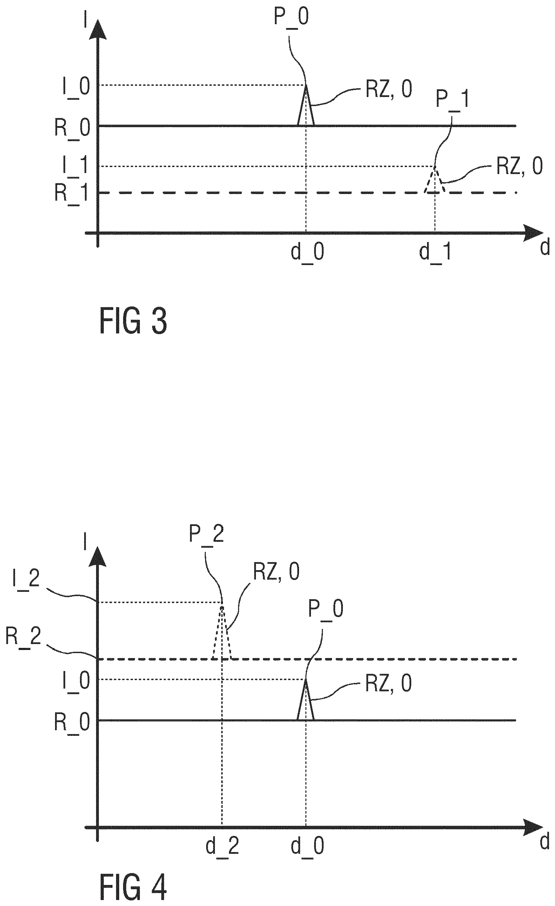

Wie Figur 3 zeigt, wird nun berechnet, an welcher Position P_1 sich das Referenzziel RZ befinden müsste, um bei diesem geringeren Rauschpegel R_1 das gleiche Signal-Rausch-Verhältnis zu erhalten wie bei der Referenzmessung gemäß Figur 1.

Unter der Bedingung, dass ein bei der Fahrbetriebsmessung aus einer Intensität I_1 und dem Rauschpegel R_1 gemäß

$$SNR\_1 = \frac{I\_1}{R\_1} \qquad (2)$$

ermitteltes Signal-Rausch-Verhältnis SNR_1 gleich dem Referenz-Signal-Rausch-Verhältnis SNR_0 ist, ergibt sich

$$I\_1 = R\_1 \cdot SNR\_0 \qquad (3)$$

Dabei ist ein Wert der Intensität I_1 der Wert, der bei Vorliegen des Rauschpegels R_1 gemessen werden müsste, wenn das Signal-Rausch-Verhältnis SNR_1 gleich dem Referenz-Signal-Rausch-Verhältnis SNR_0 ist.

Aus der Intensität I_1 und der bekannten wegabhängigen Dämpfung der Lidarstrahlung wird ein theoretischer Abstand d_1 zu der Position P_1 ermittelt, an der das Referenzziel RZ aufgestellt werden müsste, um das gleiche Signal-Rausch-Verhältnis SNR_1 = SNR_0 zu erhalten.

Der geringere Rauschpegel R_0 hat zur Folge, dass das Referenzziel RZ auch bei einer größeren Entfernung mit dem gleichen Signal-Rausch-Verhältnis wie bei der Referenzmessung detektiert werden könnte. Ein Abstand d zwischen dem Abstand d_0 und dem theoretischen Abstand d_1 entspricht einer Verlängerung der Reichweite des Lidarsensors 1, die sich ergibt, wenn der Referenzrauschpegel R_0 auf den Rauschpegel R_1 sinkt. Aus der Reduzierung des Rauschpegels R_1 gegenüber dem Referenzrauschpegel R_0 wird somit die erwartete Erhöhung der Reichweite des Lidarsensors 1 ermittelt.

Analog wird die Reichweite des Lidarsensors 1 ermittelt, wenn die Messung bei Sonnenscheint ausgeführt wird. Dies ist in Figur 4 dargestellt.

Dabei wird ein Rauschpegel R_2 erfasst, der höher ist als der Referenzrauschpegel R_0. Hierbei wird ein Position P_2 berechnet, an der sich das Referenzziel RZ befinden müsste, wenn das gleiche Signal-Rausch-Verhältnis SNR_2 wie das Referenz-Signal-Rausch-Verhältnis SNR_2 erhalten werden soll. Dabei ergibt sich gemäß

$$SNR\_2 = \frac{I\_2}{R\_2} \qquad (4)$$

eine Intensität I 2

$$I\_2 = R\_2 \cdot SNR\_0 \qquad (5)$$

Dabei ist ein Wert der Intensität I_2 der Wert, der bei Vorliegen des Rauschpegels R_2 gemessen werden müsste, wenn das Signal-Rausch-Verhältnis SNR_2 gleich dem Referenz-Signal-Rausch-Verhältnis SNR_0 ist.

Aus der Intensität I_2 und der bekannten wegabhängigen Dämpfung der Lidarstrahlung wird ein theoretischer Abstand d_2 zu der Position P_2 ermittelt, an der das Referenzziel RZ aufgestellt werden müsste, um das gleiche Signal-Rausch-Verhältnis SNR_2 = SNR_0 zu erhalten.

Der höhere Rauschpegel R_2 hat zur Folge, dass das Referenzziel RZ nur noch bei einer geringeren Entfernung mit dem gleichen Signal-Rausch-Verhältnis wie bei der Referenzmessung detektiert werden könnte. Ein Abstand d zwischen dem Abstand d_0 und dem theoretischen Abstand d_2 entspricht einer Verkürzung der Reichweite des Lidarsensors 1, die sich ergibt, wenn der Referenzrauschpegel R_0 auf den Rauschpegel R_2 ansteigt. Aus der Erhöhung des Rauschpegels R_2 gegenüber dem Referenzrauschpegel R_0 wird somit die erwartete Reduzierung der Reichweite des Lidarsensors 1 ermittelt.

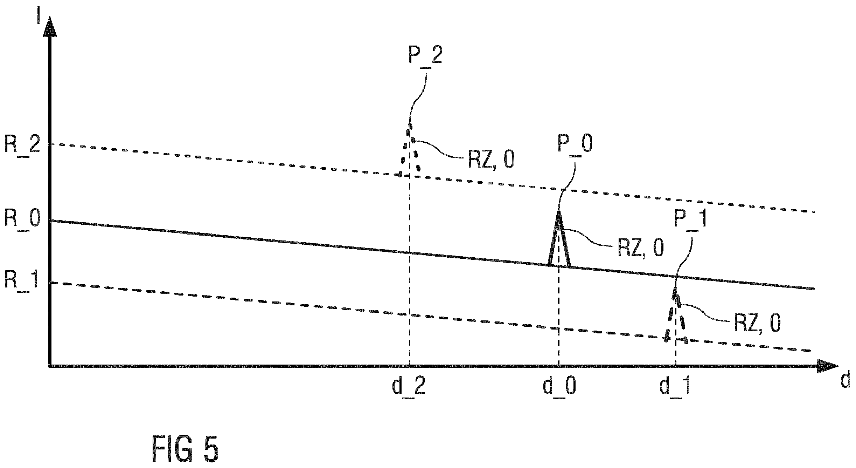

In Figur 5 ist ein Vergleich von einer bei einer Referenzmessung, einer bei Nacht durchgeführten Messung und einer bei Sonnenschein durchgeführten Messung ermittelten Intensität I einer Lidarreflexion LR in Abhängigkeit des jeweiligen Abstands d_0, d_1, d_2 zu einem Objekt O dargestellt.

Figur 6 zeigt einen Lidarsensor 1 in einem ersten Zustand und Figur 7 in einem zweiten Zustand.

Der Lidarsensor 1 umfasst einen Sender 2, einen Empfänger 3, einen Spiegel 4, ein Sichtfenster 5 und eine Infrarotstrahlungsquelle 6, beispielsweise eine leistungskontrollierte Infrarot-Leuchtdiode.

Der Referenzrauschpegel R_0 beinhaltet einen intrinsischen Rauschanteil des Lidarsensors 1. Dieser intrinsische Rauschanteil kann alterungsbedingt zunehmen. Die Zunahme des intrinsischen Rauschanteils führt zu einer Erhöhung des Rauschpegels und des Referenzrauschpegels R_0. Da das Signal-Rausch-Verhältnis umgekehrt proportional zum Rauschpegel ist, führt die Erhöhung des Rauschpegels zu einer Reduzierung des Signal-Rausch-Verhältnisses. Wenn das Signal-Rausch-Verhältnis abnimmt, nimmt auch die Reichweite des Lidarsensors 1 ab. Die alterungsbedingte Zunahme des intrinsischen Rauschanteils hat somit zur Folge, dass die Reichweite des Lidarsensors 1 abnimmt.

Wurde die Referenzmessung bereits vor einer längeren Zeit durchgeführt und soll zu einem aktuellen Zeitpunkt erneut durchgeführt werden, dann ergeben sich bei gleichen Messbedingungen aufgrund der alterungsbedingten Zunahme des intrinsischen Rauschanteils neue Werte für den Referenzrauschpegel R_O und das Referenz-Signal-Rauschverhältnis und daraus folgend auch einer neuer Wert für die Reichweite des Lidarsensors 1.

Um diese alterungsbedingte Änderung der Reichweite des Lidarsensors 1 bei den Fahrbetriebsmessungen zu berücksichtigen, werden die gespeicherten ursprünglichen Werte des Referenzrauschpegels R_0 und des Referenz-Signal-Rauschverhältnis auf neue Werte aktualisiert.

Die Aktualisierung kann grundsätzlich durch Wiederholung der Referenzmessung am EOL-Prüfstand erfolgen. Dies würde aber bedeuten, dass ein Werkstattbesuch erforderlich ist.

Um dies zu vermeiden, wird in einer möglichen Ausgestaltung die Aktualisierung rechnerisch durchgeführt. Hierzu wird zunächst eine Zunahme des intrinsischen Rauschens ΔRi ermittelt. Der ursprüngliche Referenzrauschpegel R_0 und das ursprüngliche Referenz-Signal-Rauschverhältnis SNR_0 werden dann um den Anteil korrigiert, der auf die Änderung des intrinsischen Rauschens ΔRi zurückzuführen ist. Das Ergebnis dieser Korrektur sind ein aktualisierter Referenzrauschpegel R_0* und ein aktualisiertes Referenz-Signal-Rausch-Verhältnis SNR_0* gemäß:

$$R\_0^* = R\_0 + \Delta Ri \qquad\qquad (6)$$

$$SNR\_0^* = \frac{I\_0}{R\_0^*} = \frac{I\_0}{R\_0 + \Delta Ri} \qquad\qquad (7)$$

Die gestrichelt dargestellte Infrarotstrahlung S ist ein mittels des Senders 2 erzeugter gepulster Infrarotlaserstrahl. Die Infrarotstrahlung S wird mit einem rotierenden Spiegel 4 über eine abzutastende Umgebung geschwenkt. Der Anteil der Infrarotstrahlung S, die an Objekten O in der Umgebung reflektiert wird, so genannte Infrarotreflexionen R (mit durchgezogen Linien dargestellt), wird mit dem rotierenden Spiegel auf den Empfänger 3, insbesondere eine Photodetektoranordnung, gelenkt. Aus einer Signallaufzeit wird dann ein Abstand d zu einem Reflexionsort ermittelt.

Aufgrund der Rotation des Spiegels 4 ergeben sich Dunkelphasen, so genannte Totmesszeiten, in denen keine Infrarotreflexionen R zum Empfänger 3 gelangen, wie es in Figur 7 näher dargestellt ist.

In einer solchen Totmesszeit des Lidarsensors 1, in welcher der Empfänger 3 von externer Strahlung abgeschirmt ist, wird der intrinsische Rauschanteil ermittelt, indem in der Totmesszeit mittels der innerhalb des Lidarsensors 1 in einem abgedunkelten Bereich B angeordneten Infrarotstrahlungsquelle 6 ein Referenz-Infrarotsignal RS auf den Empfänger 3 gesendet und ein Dunkelphasen-Rauschpegel ermittelt wird.

Während der Dunkelphase empfängt der Empfänger 3 ausschließlich das Referenz-Infrarotsignal RS. Während der Referenzmessung am EOL-Prüfstand wird der Rauschpegel in der Dunkelphase ermittelt und als Dunkelphasen-Rauschpegel gespeichert. Der Dunkelphasen-Rauschpegel kann dabei auch ein in mehreren Dunkelphasen ermittelter Mittelwert des Rauschpegels sein.

Im regulären Betrieb des Fahrzeugs oder Roboters wird diese Messung regelmäßig wiederholt und es wird ein aktueller Dunkelphasen-Rauschpegel ermittelt. Es wird sodann die Abweichung zwischen dem aktuellen Dunkelphasen-Rauschpegel und dem gespeicherten Dunkelphasen-Rauschpegel ermittelt. Die ermittelte Abweichung entspricht der gesuchten Änderung des intrinsischen Rauschanteils ΔRi.

## EP 4 241 111 B1

Bezugszeichenliste

| | |
|---|---|
| 1 | Lidarsensor |
| 2 | Sender |
| 3 | Empfänger |
| 4 | Spiegel |
| 5 | Sichtfenster |
| 6 | Infrarotstrahlungsquelle |

| | |
|---|---|
| B | Bereich |
| d | Abstand |
| d_0 | Abstand |
| d_1 | Abstand |
| d_2 | Abstand |
| I | Intensität |
| I_0 | Intensität |
| I_1 | Intensität |
| I_2 | Intensität |
| LR | Lidarreflexion |
| O | Objekt |
| P_0 | Position |
| P_1 | Position |
| P_2 | Position |
| R | Infrarotreflexion |
| RS | Referenz-Infrarotsignal |
| RZ | Referenzziel |
| R_0 | Referenzrauschpegel |
| R_1 | Rauschpegel |
| R_2 | Rauschpegel |
| S | Infrarotstrahlung |

## Patentansprüche

1. Verfahren zur Ermittlung einer Änderung einer Reichweite eines Lidarsensors (1) für ein Fahrzeug oder einen Roboter,

   **dadurch gekennzeichnet, dass**
   in einer Referenzmessung mit einem in einem vorgegebenen Abstand (d_0) zu dem Lidarsensor (1) befindlichen Referenzziel (RZ)

   - ein Referenzrauschpegel (R_0) von mittels des Lidarsensors (1) empfangener Infrarotstrahlung (S) und
   - ein Signal-Rausch-Verhältnis (SNR_0) von am Referenzziel (RZ) reflektierter und vom Lidarsensor (1) empfangener Infrarotstrahlung (S)

   ermittelt werden,
   in einer Fahrbetriebsmessung während eines Fahrbetriebs des Fahrzeugs oder Roboters

   - ein aktueller Rauschpegel (R_1, R_2) von mittels des Lidarsensors (1) empfangener Infrarotstrahlung (S) ermittelt wird,
   - ein Wert einer Intensität (I_1, I_2) der Infrarotstrahlung (S) durch Multiplikation des ermittelten aktuellen Rauschpegels (R_1, R_2) mit dem in der Referenzmessung ermittelten Signal-Rausch-Verhältnis (SNR_0) ermittelt wird und
   - aus dem ermittelten Wert der Intensität (I_1, I_2) der Infrarotstrahlung (S) und einer bekannten wegabhängigen Dämpfung der Infrarotstrahlung (S) ein theoretischer Abstand (d_1, d_2) zu einer Position (P_1, P_2), an welcher sich das Referenzziel (RZ) befinden müsste, wenn bei aktuellem Rauschpegel (R_1, R_2) das gleiche Signal-Rausch-Verhältnis wie bei der Referenzmessung vorliegt, ermittelt wird und

in einer Reichweitenänderungsrechnung eine Abweichung zwischen dem vorgegebenen Abstand (d_0) und dem theoretischen Abstand (d_1, d_2) ermittelt wird, wobei die Abweichung der Änderung der Reichweite des Lidarsensors (1) gegenüber dessen Reichweite während der Referenzmessung entspricht.

2. Verfahren nach Anspruch 1,
   **dadurch gekennzeichnet, dass** die Reichweite als Abstand (d) definiert wird, bei welchem das Signal-Rausch-Verhältnis einem vorgegebenen Schwellwert entspricht.

3. Verfahren nach einem der vorhergehenden Ansprüche, **dadurch gekennzeichnet, dass** die Referenzmessung nach einer definierten Zeit erneut durchgeführt wird.

4. Verfahren nach einem der vorhergehenden Ansprüche, **dadurch gekennzeichnet, dass** in der Referenzmessung bei der Ermittlung des Referenzrauschpegels (R_0) eine Änderung eines intrinsischen Rauschanteils des Lidarsensors (1) berücksichtigt wird.

5. Verfahren nach Anspruch 4, **dadurch gekennzeichnet, dass** die Berücksichtigung der Änderung des intrinsischen Rauschanteils rechnerisch erfolgt, indem der Referenzrauschpegel (R_0) und das Signal-Rausch-Verhältnis am Referenzziel (RZ) um einen jeweiligen Anteil korrigiert werden, welcher aus dem intrinsischen Rauschanteil folgt.

6. Verfahren nach Anspruch 4 oder 5, **dadurch gekennzeichnet, dass** der intrinsische Rauschanteil während einer Totmesszeit des Lidarsensors (1), in welcher ein Empfänger (3) des Lidarsensors (1) von externer Strahlung abgeschirmt ist, ermittelt wird, indem in der Totmesszeit mittels einer innerhalb des Lidarsensors (1) angeordneten Infrarotstrahlungsquelle (6) ein Referenz-Infrarotsignal (RS) auf den Empfänger (3) gesendet wird und ein Dunkelphasen-Rauschpegel ermittelt wird.

7. Verfahren nach Anspruch 6, **dadurch gekennzeichnet, dass** der Dunkelphasen-Rauschpegel als Mittelwert aus mehreren Dunkelphasen-Rauschpegeln ermittelt wird.

8. Verfahren nach Anspruch 6 oder 7, **dadurch gekennzeichnet, dass** der Dunkelphasen-Rauschpegel während des Fahrbetriebs des Fahrzeugs oder Roboters ermittelt wird.

9. Verfahren nach einem der vorhergehenden Ansprüche, **dadurch gekennzeichnet, dass** die Referenzmessung als Bandende-Prüfung am Ende einer Herstellung des Fahrzeugs oder Roboters durchgeführt wird.

**Claims**

1. Method for determining a change in the range of a lidar sensor (1) for a vehicle or a robot,
   **characterized in that**

   in a reference measurement having a reference target (RZ) located at a predetermined distance (d_0) from the lidar sensor (1)

   - a reference noise level (R_0) of infrared radiation (S) received by the lidar sensor (1) and
   - a signal-to-noise ratio (SNR_0) of infrared radiation (S) reflected at the reference target (RZ) and received by the lidar sensor (1)

   are determined,
   in a driving operation measurement during a driving operation of the vehicle or robot

   - a current noise level (R_1, R_2) of infrared radiation (S) received by the lidar sensor (1) is determined,
   - a value of an intensity (I_1, I_2) of the infrared radiation (S) is determined by multiplying the determined current noise level (R_1, R_2) by the signal-to-noise ratio (SNR_0) determined in the reference measurement, and
   - from the determined value of the intensity (I_1, I_2) of the infrared radiation (S) and a known path-dependent attenuation of the infrared radiation (S), a theoretical distance (d_1, d_2) to a position (P_1, P_2) at which the reference target (RZ) would have to be located if the same signal-to-noise ratio as in the reference measurement is present at the current noise level (R_1, R_2) is determined, and

**EP 4 241 111 B1**

in a range change calculation, a deviation between the predetermined distance (d_0) and the theoretical distance (d_1, d_2) is determined, the deviation corresponding to the change in the range of the lidar sensor (1) compared to the range of said sensor during the reference measurement.

2. Method according to claim 1,
**characterized in that** the range is defined as the distance (d) at which the signal-to-noise ratio corresponds to a predetermined threshold.

3. Method according to either of the preceding claims,
**characterized in that** the reference measurement is carried out again after a defined time.

4. Method according to any of the preceding claims,
**characterized in that** in the reference measurement, a change in an intrinsic amount of noise of the lidar sensor (1) is taken into account when determining the reference noise level (R_0).

5. Method according to claim 4,
**characterized in that** the change in the intrinsic amount of noise is taken into account mathematically by the reference noise level (R_0) and the signal-to-noise ratio at the reference target (RZ) being corrected by a relevant amount resulting from the intrinsic amount of noise.

6. Method according to claim 4 or claim 5,
**characterized in that** the intrinsic amount of noise is determined during a dead measurement time of the lidar sensor (1), during which a receiver (3) of the lidar sensor (1) is shielded from external radiation, by a reference infrared signal (RS) being sent to the receiver (3) and by a dark phase noise level being determined by means of an infrared radiation source (6) arranged within the lidar sensor (1) during the dead measurement time.

7. Method according to claim 6,
**characterized in that** the dark phase noise level is determined as the average of several dark phase noise levels.

8. Method according to claim 6 or claim 7,
**characterized in that** the dark phase noise level is determined during the driving operation of the vehicle or robot.

9. Method according to any of the preceding claims,
**characterized in that** the reference measurement is carried out as an end-of-line test at the end of production of the vehicle or robot.

**Revendications**

1. Procédé de détermination d'un changement d'une portée d'un capteur lidar (1) pour un véhicule ou un robot,
**caractérisé en ce que**

dans une mesure de référence avec une cible de référence (RZ) se trouvant à une distance prédéterminée (d_0) du capteur lidar (1)

- un niveau de bruit de référence (R_0) du rayonnement infrarouge (S) reçu par le biais du capteur lidar (1), et
- un rapport signal/bruit (SNR_0) de rayonnement infrarouge (S) réfléchi par la cible de référence (RZ) et reçu par le capteur lidar (1)

sont déterminés,
dans une mesure d'activité de conduite pendant une opération de conduite du véhicule ou du robot

- un niveau de bruit actuel (R_1, R_2) de rayonnement infrarouge (S) reçu par le biais du capteur lidar (1) est déterminé,
- une valeur d'une intensité (I_1, I_2) du rayonnement infrarouge (S) est déterminée en multipliant le niveau de bruit actuel (R_1, R_2) déterminé par le rapport signal/bruit (SNR_0) déterminé dans la mesure de référence et
- à partir de la valeur déterminée de l'intensité (I_1, I_2) du rayonnement infrarouge (S) et d'une atténuation

9

connue, dépendant du trajet, du rayonnement infrarouge (S), une distance théorique (d_1, d_2), par rapport à une position (P_1, P_2) à laquelle la cible de référence (RZ) devrait se trouver si, au niveau de bruit actuel (R_1, R_2), le même rapport signal/bruit que pour la mesure de référence est présent, est déterminée et

dans un calcul de changement de la portée, un écart entre la distance prédéterminée (d_0) et la distance théorique (d_1, d_2) est déterminé, dans lequel l'écart correspond au changement de la portée du capteur lidar (1) par rapport à sa portée pendant la mesure de référence.

2. Procédé selon la revendication 1,
**caractérisé en ce que** la portée est définie comme une distance (d) à laquelle le rapport signal/bruit correspond à une valeur seuil prédéterminée.

3. Procédé selon l'une des revendications précédentes,
**caractérisé en ce que** la mesure de référence est réalisée à nouveau après un temps défini.

4. Procédé selon l'une des revendications précédentes,
**caractérisé en ce que** dans la mesure de référence, lors de la détermination du niveau de bruit de référence (R_0), un changement d'une composante de bruit intrinsèque du capteur lidar (1) est prise en compte.

5. Procédé selon la revendication 4,
**caractérisé en ce que** la prise en compte du changement de la composante de bruit intrinsèque est effectuée par calcul, en corrigeant le niveau de bruit de référence (R_0) et le rapport signal/bruit au niveau de la cible de référence (RZ) d'une composante respective qui résulte de la composante de bruit intrinsèque.

6. Procédé selon la revendication 4 ou 5,
**caractérisé en ce que** la composante de bruit intrinsèque est déterminée pendant un temps mort de mesure du capteur lidar (1), pendant lequel un récepteur (3) du capteur lidar (1) est protégé du rayonnement externe, en envoyant pendant le temps mort de mesure un signal infrarouge de référence (RS) sur le récepteur (3) par le biais d'une source de rayonnement infrarouge (6) agencée à l'intérieur du capteur lidar (1) et en déterminant un niveau de bruit de phase sombre.

7. Procédé selon la revendication 6,
**caractérisé en ce que** le niveau de bruit de phase sombre est déterminé en tant que valeur moyenne à partir de plusieurs niveaux de bruit de phase sombre.

8. Procédé selon la revendication 6 ou 7,
**caractérisé en ce que** le niveau de bruit de phase sombre est déterminé pendant l'activité de conduite du véhicule ou du robot.

9. Procédé selon l'une des revendications précédentes,
**caractérisé en ce que** la mesure de référence est réalisée en tant que vérification de fin de bande à la fin d'une fabrication du véhicule ou du robot.

FIG 1

FIG 2

FIG 3

FIG 4

FIG 5

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19948252 A1
- DE 102020115252 A1
- DE 102018126497 A1
- EP 2637038 A1